Europäisches Patentamt

European Patent Office

Office européen des brevets

(11) Numéro de publication : **0 124 403**
**B1**

(12) **FASCICULE DE BREVET EUROPÉEN**

(45) Date de publication du fascicule du brevet :
09.09.87

(51) Int. Cl.⁴ : **B 29 C 63/02**, B 29 L 31/24

(21) Numéro de dépôt : **84400634.6**

(22) Date de dépôt : **29.03.84**

(54) Procédé de fabrication de brides à collerette, haute pression, en matériau composite, et produit obtenu.

(30) Priorité : 31.03.83 FR 8305348

(43) Date de publication de la demande :
07.11.84 Bulletin 84/45

(45) Mention de la délivrance du brevet :
09.09.87 Bulletin 87/37

(84) Etats contractants désignés :
AT BE CH DE GB IT LI LU NL SE

(56) Documents cités :
DE-A- 2 158 511
FR-A- 1 447 820
US-A- 3 410 936

(73) Titulaire : SOCIETE D'EXPLOITATION DES PROCE-
DES PLASTREX-MANURHIN SEPMA
14, rue de Soultz
F-68200 Mulhouse (FR)

(72) Inventeur : Woerth, Pierre
35, rue Jean Martin
F-68200 Mulhouse (FR)
Inventeur : Pierrot, Jean-Marie
16, Rue d'Altkirch
F-68400 Riediesheim (FR)
Inventeur : Fennenberger, Joseph
31, Rue Soland
F-68720 Hochstatt (FR)

(74) Mandataire : Martin, Jean-Jacques et al
Cabinet REGIMBEAU 26, Avenue Kléber
F-75116 Paris (FR)

EP 0 124 403 B1

## Description

La présente invention concerne le domaine de la fabrication, par moulage, de produits à base de résine thermo-durcissable.

Plus précisément, la présente invention concerne un procédé de fabrication de brides en matériau composite, c'est-à-dire comprenant un corps en béton de résine thermo-durcissable, au moins partiellement enveloppé par une paroi à base de fibres de verre ou autres, telles que fibres de carbone ou fibres de polyamide, imprégnées de résine thermo-durcissable.

De telles brides sont destinées aux raccordements de tubes en résine thermo-durcissable armée de fibres de verre ou analogues devant tenir de hautes pressions, par exemple supérieures ou égales à $16 \cdot 10^9$ Pa (16 bars).

Pour ce faire, ces brides sont constituées généralement d'une partie formant collerette, destinée à être insérée sur le tube, et fixée sur celui-ci par collage, ou vissage, solidaire d'un plateau. Ce dernier présente des orifices traversants permettant le passage de boulons pour l'assemblage.

Dans la pratique, ces brides sont préférées aux produits concurrents du type manchons collés biconiques ou cylindriques, en raison de la possibilité de démontage et par là, des facilités de maintenance. D'autre part, les brides en matériau composite sont préférées aux collets/brides en raison de la meilleure résistance aux corrosions extérieures et de leur longévité.

De nombreux procédés de fabrication de brides ont déjà été proposés. Toutefois, ces procédés présentent tous de gros inconvénients, qui sont soit d'ordre technique et dus par exemple à la mauvaise qualité des produits obtenus, soit d'ordre économique, en raison du coût élevé de fabrication ou de la cadence faible du procédé.

Ainsi, tel que cela est décrit par exemple dans la demande de brevet en France n° 2 486 455, on a proposé de fabriquer des brides par moulage manuel par stratification de tissus de verre imprégnés de résine thermo-durcissable. Cependant, la qualité du produit fini obtenu grâce à un tel procédé est tributaire dans une large mesure de la dextérité de l'opérateur. D'autre part, les caractéristiques mécaniques du produit sont très dispersées car on ne peut maîtriser le taux de verre et la qualité de l'imprégnation. De plus, les malfaçons telles que mauvaise imprégnation, bulles d'air incluses, richesse locale en résine, peuvent aisément passer inaperçues.

On a également proposé de fabriquer des brides haute pression par moulage, à la presse, de produits pré-imprégnés. Toutefois, les matières susceptibles d'être alors utilisées contiennent une forte proportion de matières de charge (généralement carbonates) et ne peuvent de ce fait être utilisées pour le raccordement de tubes véhiculant des produits corrosifs, domaine privilégié des tuyauteries en résine thermo-durcissable armée.

D'autre part, les caractéristiques mécaniques des brides obtenues par ce dernier procédé sont faibles, du fait d'un taux de verre peu élevé, de l'ordre de 30 %, de la faible longueur des fibres de renforcement utilisées et/ou de leur orientation privilégiée, dans le cas de pré-imprégnés. De ce fait, les brides réalisées par moulage sous presse à l'aide de tels produits pré-imprégnés ne répondent pas souvent aux deux caractéristiques recherchées simultanément : tenue à la corrosion et à de hautes pressions.

On a d'autre part proposé un procédé de fabrication de brides haute pression, selon lequel les fibres de verre de grandes longueurs sont enroulées sur elles-mêmes. La résistance mécanique de telles brides est faible du fait de l'orientation circonférentielle des fibres qui sont ainsi mal utilisées. En effet, au moment de la flexion de la bride à collerette lors du serrage des boulons, la résistance de la bride est seulement égale à la résistance mécanique de la résine non renforcée. Dans la pratique, ce procédé n'est utilisable que pour des brides basse pression, c'est-à-dire une pression inférieure à $10^6$ Pa (10 bars).

On a également proposé comme décrit dans le document US-A-3 410 936, pour réaliser des articles en matériau composite, après avoir préparé un moule en garnissant celui-ci d'une couche d'un mélange de résine époxy et de fibres métalliques délimitant une surface de travail, de déposer sur cette dernière une couche de gel coat, à l'aide d'un pinceau, de remplir la cavité du moule d'une masse de fibres à l'aide d'un pistolet, puis d'imprégner ce matériau de remplissage à l'aide d'une résine époxy.

La demanderesse vient maintenant proposer un procédé de fabrication de brides à collerette, haute pression, en matériau composite qui comprend les étapes suivantes :

a) déposer dans la matrice du moule une préforme à base de fibres de verre ou analogues, destinée à délimiter la surface extérieure du plateau et la surface extérieure de la collerette,

b) déposer dans la matrice du moule au moins une couche de fibres de verre ou analogues, au niveau de la face d'étanchéité de la collerette et du plateau,

c) remplir la matrice du moule, de charges minérales inertes vis-à-vis des produits destinés à être véhiculés, présentant des dimensions appropriées par rapport aux couches de fibres utilisées de telle sorte que celles-ci jouent le rôle de filtre interdisant le passage des charges,

d) recouvrir les charges minérales d'au moins une couche de fibres de verre ou analogues au niveau de la face de raccordement du plateau,

e) fermer le moule,

f) injecter de la résine thermo-durcissable à l'intérieur du moule, tout en reliant celui-ci à des moyens générateurs de dépression.

De préférence, le procédé de fabrication conforme à la présente invention comporte en outre après l'étape c), l'étape supplémentaire consistant à opérer un tassage des charges minérales par mise en vibrations du moule.

Selon une autre caractéristique de la présente invention, le procédé comprend en outre l'étape complémentaire consistant à disposer le moule dans lequel on a injecté la résine thermo-durcissable à l'intérieur d'un tunnel ou d'une étuve de polymérisation.

Selon un mode de réalisation avantageux conforme à la présente invention, le procédé comprend avant l'étape b), l'étape supplémentaire consistant à déposer une couche de résine thermo-durcissable sur les surfaces du moule destinées à recevoir ultérieurement la couche de fibres prévue au niveau des faces d'étanchéité de la collerette et du plateau.

Le cas échéant, le procédé conforme à la présente invention comprend en outre, avant l'étape e) l'étape consistant à déposer une couche de résine thermo-durcissable sur un poinçon destiné à recouvrir la matrice du moule, au niveau de la face d'étanchéité.

La bride à collerette haute pression en matériau composite conforme à la présente invention comprend :

une préforme à base de fibres de verre ou analogues délimitant la face extérieure du plateau et la face extérieure de la collerette,

au moins une couche de fibres de verre ou analogues au niveau de la face d'étanchéité de la collerette et du plateau,

au moins une couche de fibres de verre ou analogues au niveau de la face de raccordement du plateau,

un corps en béton de résine thermo-durcissable et comprenant des charges minérales inertes vis-à-vis des produits destinés à être véhiculés.

Selon une caractéristique préférentielle de la présente invention, les couches de fibres sont choisies de telle sorte qu'elles jouent le rôle de filtre interdisant le passage des charges minérales du corps, tout en étant susceptibles d'être traversées et imprégnées aisément par la résine thermo-durcissable.

Selon d'autres caractéristiques préférentielles de la présente invention :

la préforme en fibres de verre possède un poids moyen compris entre 1 750 et 2 250 g/m², 

les fibres de verre prévues au niveau de la face d'étanchéité de la collerette et du plateau forment un voile d'un poids moyen de l'ordre de 100 g/m²,

la couche de fibres de verre prévue au niveau de la face de raccordement du plateau présente un poids moyen compris entre 2 500 et 3 000 g/m²,

la granulométrie moyenne des charges minérales est comprise entre 0,2 et 5 mm,

la densité apparente des charges minérales à l'état tassé est ⩾1, 6,

le pourcentage en poids des charges minérales est ⩾75 %.

Le procédé conforme à la présente invention présente de nombreux avantages par rapport aux procédés antérieurement proposés. On peut citer, à titre d'exemple :

une maîtrise du taux de verre qui peut être important dans les zones renforcées par les fibres (de l'ordre de 60 %) et nul dans les zones soumises à la corrosion,

une imprégnation excellente et rapide sans intervention manuelle,

des temps de fabrication courts,

des produits présentant des caractéristiques mécaniques élevées et reproductibles,

l'absence de charges minérales dans les parties dommageables et de ce fait une barrière anticorrosion conforme aux normes généralement imposées dans le domaine de la construction,

une économie substantielle.

D'autres particularités et avantages de la présente invention apparaîtront à la lecture de la description détaillée qui va suivre et en regard des dessins annexés, donnés à titre d'exemple non limitatif, et sur lesquels :

la figure 1 représente une vue schématique en coupe axiale d'une bride à collerette conforme à la présente invention,

les figures 2a à 2i illustrent schématiquement les différentes étapes principales du procédé conforme à la présente invention.

Il doit être entendu que le mode de réalisation particulier qui va être évoqué par la suite, et qui comporte l'utilisation de couches de fibres de verre, ne doit pas être considéré comme limitatif, ces couches de fibres de verre pourront en effet être remplacées par des fibres de carbone, de polyamide, ou autres...

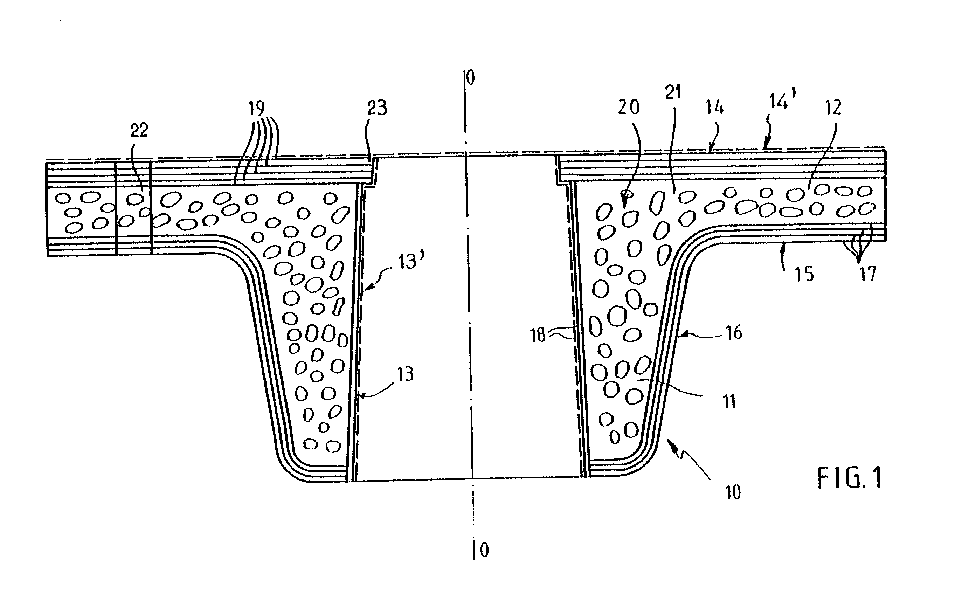

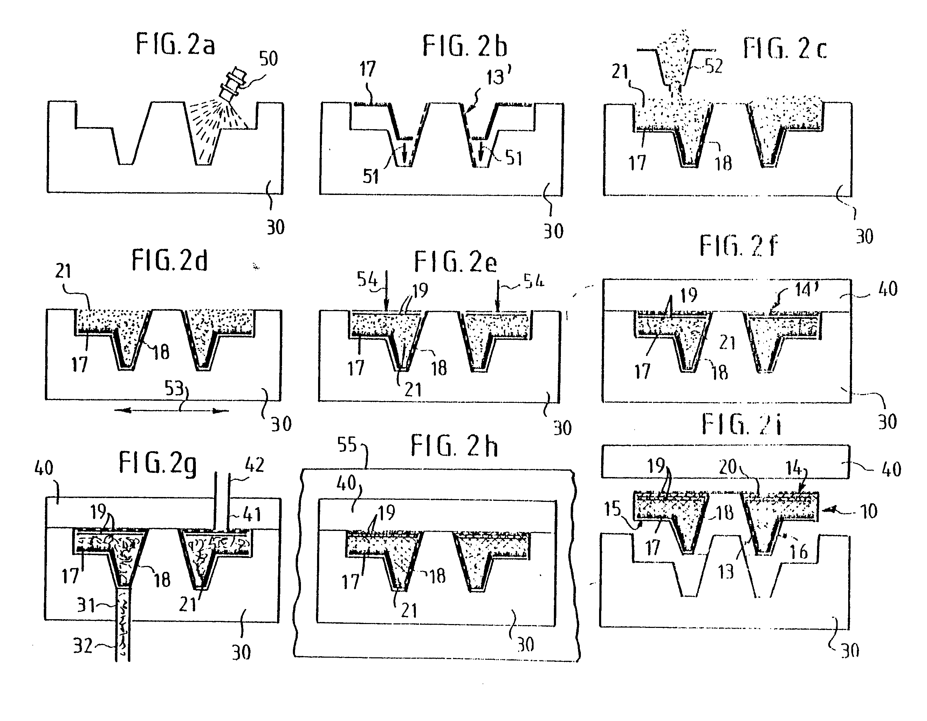

Pour bien comprendre les différentes étapes du procédé conforme à la présente invention, telles que celles-ci sont illustrées schématiquement sur les figures 2a à 2i, on va dans un premier temps décrire la structure de la bride haute pression que l'on souhaite obtenir, telle que celle-ci est représentée sur la figure 1.

Sur cette même figure, on a référencé O-O l'axe de la bride. Cette dernière présente une symétrie de révolution par rapport à cet axe O-O.

D'une façon générale, la bride 10 se compose d'une première partie 11 formant collerette, solidaire d'une seconde partie 12 formant plateau. Ce dernier présente des orifices traversants d'axe parallèle à l'axe O-O (tels que l'orifice schématiquement représenté en 22 sur la figure 1), permettant le passage de boulons pour l'assemblage des brides. La collerette 11, quant à elle, est destinée à être insérée sur l'extrémité d'un tube dont on désire assurer le raccordement.

La face périphérique interne 13 de la collerette 11 et du plateau 12 est destinée à venir en contact contre la surface extérieure de l'extrémité du tube, et dénommée face d'étanchéité. Sur la figure 1, cette face d'étanchéité présente une forme générale tronconique d'axe O-O évasée en direction de l'extrémité d'insertion du tube, c'est-à-dire l'extrémité de la collerette opposée au plateau 12. De préférence, la bride peut également comporter un talon 23 formé par une nervure annulaire sur la face d'étanchéité 13, et au niveau de l'ouverture de faible diamètre de celle-ci, côté plateau 12. Un tel talon constitue alors une butée annulaire pour l'extrémité du tube.

D'autre part, on appelle face de raccordement la surface 14 en forme de couronne circulaire présentée par le plateau 12 à l'opposé de la collerette 11.

Enfin, les faces de la collerette 11 et du plateau 12 opposées aux faces d'étanchéité 13 et face de raccordement 14 précitées sont dénommées, dans la suite de la description, faces extérieures.

Ces dernières ont été référencées respectivement 15 et 16 sur la figure 1, pour la face extérieure du plateau 12 d'une part et pour la face extérieure de la collerette 11 d'autre part.

La bride à collerette haute pression en matériau composite et réalisée conformément à la présente invention comprend au moins une préforme en fibres de verre 17 ou analogues délimitant la face extérieure 15 du plateau 12 et la face extérieure de la collerette 11. Sur la figure 1, on a ainsi représenté schématiquement la préforme par quatre traits continus référencés 17. Cette préforme dont les caractéristiques seront précisées par la suite, sera réalisée à l'aide de tous moyens classiques appropriés, tels que, par exemple, par formage à la presse.

D'autre part, la bride 10 comprend également au moins un voile de fibres de verre 18 au niveau de la face d'étanchéité 13 de la collerette 11, ainsi qu'au moins une couche de fibres de verre 19 au niveau de la face de raccordement 14 du plateau 12. Sur la figure 1, on a ainsi représenté schématiquement la couche 19 par cinq traits continus, au niveau de la face de raccordement 14 du plateau 12, et le voile 18 par deux traits continus.

Enfin, tel que cela est représenté sur la figure 1, la bride 10 comprend un corps 20 en béton de résine thermo-durcissable, comprenant des charges minérales inertes vis-à-vis des produits véhiculés. Ces éléments ont été schématiquement représentés sur la figure 1.

Par charges minérales inertes vis-à-vis des produits véhiculés, on entend des charges stables chimiquement vis-à-vis des liquides qui seront véhiculés par les tubes assemblés grâce auxdites brides.

Selon une caractéristique importante de la présente invention, les couches de fibres de verre 17, 18, 19 utilisées pour la fabrication de brides à collerette haute pression, sont choisies de telle sorte qu'elles jouent le rôle de filtre, interdisant le passage des charges minérales du corps 20, tout en étant susceptibles d'être traversées et imprégnées aisément par la résine thermo-durcissable.

Les couches de fibres de verre 17 de la préforme sont adaptées, en nombre, qualité, et orientation, de telle sorte que cette zone de la bride 10 résiste correctement aux contraintes imposées à la bride lors du serrage des boulons d'assemblage, à savoir la traction due à la flexion imposée à la bride.

D'autre part, on notera que le plateau 12 doit résister à la compression et à la flexion dues au serrage des boulons lors du raccordement.

Le corps 20 est constitué d'un béton de résine comportant des charges chimiquement inertes, vis-à-vis des produits véhiculés, telles que chamotte, sable, silice, et/ou billes de verre, mélangées ou non avec des fibres de verre courtes. Bien entendu, la granulométrie des charges est déterminée de telle sorte que le corps 20 présente de bonnes qualités mécaniques, la masse de charges étant aisément imprégnée par la résine.

Des caractéristiques préférentielles des charges seront précisées par la suite.

La face d'étanchéité 13 et la face de raccordement 14 qui sont susceptibles d'être en contact avec le produit véhiculé dans la tuyauterie, et donc soumises à la corrosion de celui-ci doivent bien entendu être conformes aux normes imposées.

Celles-ci exigent, d'une façon générale, que les faces d'étanchéité 13 et de raccordement 14 soient riches en résine, la face 14 étant renforcée par des fibres de verre.

On a schématiquement représenté sur la figure 1 des couches de gel-coat recouvrant de préférence les couches de fibres 18 et 19 prévues au niveau des faces d'étanchéité 13 et de raccordement 14 par des traits interrompus référencés 13' et 14'.

On va maintenant décrire les différentes étapes de mise en œuvre du procédé conforme à la présente invention, telles que celles-ci sont schématiquement représentées sur les figures 2a à 2i.

Sur les figures 2a à 2i, on a schématiquement représenté et référencé 30 la matrice du moule. D'autre part, on a schématiquement représenté et référencé 40 le contre-moule ou poinçon.

La première étape, schématiquement représentée sur la figure 2a, consiste à préparer la matrice 30 en procédant au nettoyage, et le cas échéant, au cirage de celle-ci. De telles opérations doivent être réalisées par exemple à l'aide d'une buse pulvérisante schématiquement représentée en 50. Ces opérations sont tout à fait classiques en soi pour l'homme du métier, et ne seront par conséquent pas décrites plus en détail dans la suite de la description.

Tel que cela est schématiquement représenté sur la figure 2b, par les flèches référencées 51, il convient alors de déposer dans la matrice 30 du moule la préforme 17 en fibres de verre destinée à délimiter la face extérieure 15 du plateau 12 et la face extérieure 16 de la collerette 11.

Une telle opération doit bien entendu être réalisée avec soin. En particulier, on doit s'assurer que les couches de fibres de verre de la préforme 17 sont bien appliquées contre les parois de la matrice.

De façon similaire, il convient alors, après avoir de préférence pulvérisé une couche de résine thermo-durcissable ou gel-coat sur la surface du moule 30 destinée à délimiter la face d'étanchéité 13 de la collerette 11 (cette couche de résine est représentée schématiquement sous forme de traits interrompus référencés 13'), de déposer dans la matrice 30 du moule au moins une couche de fibres de verre 18. Une telle couche de fibres de verre 18 apparaît par exemple sur la figure 2c.

L'étape suivante, représentée sur la figure 2c, consiste alors à remplir la matrice 30 du moule de charges minérales 21 inertes vis-à-vis des produits destinés à être véhiculés. Tel que cela a été précédemment indiqué, de telles charges minérales 21 doivent présenter des dimensions appropriées par rapport aux couches de fibres de verre 17, 18 et 19, de telle sorte que celles-ci jouent le rôle de filtre empêchant le passage des charges lors des étapes ultérieures. Le remplissage de la matrice 30 en charges 21 peut être réalisé à l'aide d'une trémie classique schématiquement représentée 52 sur la figure 2c. De préférence, un tel remplissage est effectué par dosage volumétrique.

Tel que cela est schématiquement représenté sur la figure 2d par la flèche référencée 53, on procède alors de préférence à la mise en vibration de la matrice 30, de façon à provoquer le tassage des charges minérales 21. Bien entendu, un tel tassage peut également être réalisé par tout autre moyen approprié.

L'étape suivante, représentée sur la figure 2e, consiste alors à mettre en place la barrière anticorrosion au niveau de la face de raccordement du plateau 14. Plus précisément, cette étape consiste à mettre en place la couche de fibres de verre 19 précitée. Une telle étape a été schématiquement représentée sur la figure 2e par les flèches référencées 54.

On peut alors, tel que cela est représenté sur la figure 2f, procéder à la pose du contre-moule ou poinçon 40 sur la matrice 30, de façon à fermer le moule. Au préalable et au niveau de la face de raccordement 14, on peut déposer sur le poinçon 40 une couche de résine thermo-durcissable, par exemple par pulvérisation comme pratiqué antérieurement pour enduire la matrice 30 au niveau de la face 13 d'étanchéité. Cette couche de résine est représentée schématiquement sous forme de traits interrompus référencés 14'.

Tel que cela est représenté sur la figure 2g, on relie alors un orifice 31, en communication directe ou indirecte avec la cavité intérieure du moule, à un dispositif d'injection de résine (non représenté sur la figure), à l'aide d'un raccord 32. De façon similaire, un second orifice 41 en communication directe ou indirecte avec la cavité intérieure du moule, et de préférence opposé à l'orifice 31 précité, est relié par l'intermédiaire d'un raccord 42 à des moyens générateurs de dépression (non représentés sur la figure).

On procède alors à la mise sous vide primaire de la cavité interne de la matrice 30 par l'intermédiaire de l'orifice 41, et à l'injection simultanée de résine thermo-durcissable, grâce à l'orifice 31.

Tel que cela a été précédemment indiqué, grâce au choix approprié des couches de fibres de verre 17, 18 et 19 par rapport aux dimensions des charges minérales 21, on obtient d'une part que lesdites couches de fibres de verre 17, 18 et 19 jouent le rôle de filtre interdisant le passage des charges minérales de telle sorte que celles-ci n'apparaissent pas à la surface de la bride finie.

D'autre part, les couches de fibres de verre 17, 18 et 19 sont correctement imprégnées par la résine thermo-durcissable. Ainsi, les fibres de verre elles-mêmes sont recouvertes en surface par une pellicule de résine.

L'étape ultérieure représentée sur la figure 2h consiste alors à disposer le moule 30, 40, dans lequel on a injecté la résine thermo-durcissable, à l'intérieur d'une étuve ou d'un tunnel de polymérisation schématiquement représenté en 55. La température ambiante et le temps de séjour dans le tunnel de polymérisation 55 seront aisément déterminés par l'homme du métier, compte tenu de la masse de résine utilisée et des caractéristiques particulières de celle-ci.

Tel que cela est représenté sur la figure 2i, il convient alors d'ouvrir le moule en séparant le contre-moule ou poinçon 40 de la matrice 30. La bride 10 finie peut alors être retirée de la matrice 30 à l'aide de tout moyen approprié. Cette bride 10 est directement utilisable.

La matrice 30 et le poinçon 40 peuvent être immédiatement recyclés pour reprendre le procédé de fabrication au niveau de l'étape 2a.

On comprend par conséquent que le procédé conforme à la présente invention permet la fabrication de brides haute pression en continu, et ce en système complètement automatisé.

On va maintenant préciser les caractéristiques d'un exemple de bride haute pression conforme à la présente invention. Des essais réalisés à l'aide d'un tube dont le diamètre extérieur est de l'ordre de 100 mm et d'une bride répondant à ces caractéristiques ont permis de montrer que celle-ci pouvait tenir des pressions égales ou supérieures à 70 bars.

La préforme 17 en fibres de verre possède un poids moyen de 1 750 à 2 250 $g/m^2$, étant entendu qu'elle se présente sous forme d'une structure tridimensionnelle en « tulipe ouverte » d'une épaisseur de l'ordre de 1,8 mm, constituée par des fibres orientées environ pour moitié perpendiculairement à l'axe O-O' et environ pour moitié parallèlement aux faces extérieures 15 et 16.

Le voile 18 en fibres de verre présente un poids moyen de l'ordre de 100 $g/m^2$, les fibres de verre le constituant, étant orientées dans un plan parallèle à la face d'étanchéité 13, c'est-à-dire presque parallèles à l'axe O-O'.

La couche 19 de fibres de verre renforçant la face de raccordement 14 du plateau 12 possède un poids moyen compris entre 2 500 et 3 000 $g/m^2$, de préférence 2 800 $g/m^2$, et se présente sous forme d'un anneau d'une épaisseur de l'ordre de 2,5 mm dont les fibres sont pour la plupart orientées dans un plan perpendiculaire à l'axe O-O'.

Ces premières caractéristiques sont déterminées pour qu'à la plus faible quantité de fibres de verre correspondent les meilleures caractéristiques mécaniques possibles de la bride 10 tout en permettant aux couches de fibres de verre 17, 18 et 19 de jouer leur rôle de filtre interdisant le passage des charges minérales, quels que soient d'ailleurs les mouvements ultérieurs du moule fermé, retournement accidentel par exemple.

Les charges minérales 21 utilisées, à base de chamotte, sable, silice ou autres présentent une granulométrie moyenne de 0,2 à 5 mm, et de préférence de 0,2 à 2 mm, exempte de charges ultra-fines, c'est-à-dire inférieures à 80 μ.

En outre, le pourcentage en poids des charges minérales 21 est supérieur ou égal à 75 %, et de préférence compris entre 80 et 85 %, le pourcentage en résine thermo-durcissable étant de ce fait inférieur à 25 %, et de préférence compris entre 15 et 20 %.

D'autre part, la densité apparente à l'état tassé des charges 21 est supérieure à 1,6, et de préférence de l'ordre de 1,8.

Ces dernières caractéristiques sont déterminées pour obtenir une bride économique incorporant une quantité importante de charges minérales, tout en autorisant une imprégnation satisfaisante par la résine.

La résine thermo-durcissable utilisée peut être par exemple du vinylester ou du polyester au bisphénol, mélangé avec du peroxyde de benzoyle en tant que durcisseur.

La durée de polymérisation de ce mélange est de l'ordre d'une demi-heure à 90 °C, le temps de maintien du moule dans le tunnel de polymérisation 55 dépendant de sa température initiale.

Bien entendu, la présente invention n'est pas limitée aux modes de réalisation et de mise en œuvre qui viennent d'être décrits, à partir desquels on pourra envisager de nombreuses variantes de réalisation conformes à l'esprit de l'invention sans sortir pour autant du cadre de celle-ci, tel que défini par les revendications.

## Revendications

1. Procédé de fabrication de brides à collerette haute pression en matériau composite, caractérisé par le fait qu'il comprend les étapes suivantes :

a) déposer dans la matrice (30) d'un moule une préforme (17) à base de fibres de verre ou analogues destinée à délimiter la surface extérieure (15) du plateau (12) et la surface extérieure (16) de la collerette (11),

b) déposer dans la matrice du moule au moins une couche de fibres de verre ou analogues (18) au niveau de la face d'étanchéité (13) de la collerette (11) et du plateau (12),

c) remplir la matrice (30) du moule, de charges minérales (21) inertes vis-à-vis des produits destinés à être véhiculés, présentant des dimensions appropriées par rapport aux couches de fibres utilisées (17, 18) de telle sorte que celles-ci jouent le rôle de filtre interdisant le passage des charges,

d) recouvrir les charges minérales (21) d'au moins une couche de fibres de verre (19) ou analogues au niveau de la face de raccordement (14) du plateau,

e) fermer le moule,

f) injecter de la résine thermo-durcissable à l'intérieur du moule, tout en reliant celui-ci à des moyens générateurs de dépression.

2. Procédé de fabrication de brides à collerette selon la revendication 1, caractérisé par le fait qu'il comprend en outre l'étape consistant à opérer un tassage des charges minérales (21), par mise en vibrations du moule (30) (figure 2d).

3. Procédé de fabrication de brides à collerette selon l'une des revendications 1 et 2, caractérisé par le fait qu'il comprend en outre l'étape complémentaire consistant à disposer le moule (30) dans lequel on a injecté la résine thermo-durcissable, à l'intérieur d'une étuve de polymérisation (55) (figure 2h).

4. Procédé de fabrication de brides à collerette selon l'une des revendications 1 à 3, caractérisé par le fait qu'il comprend avant l'étape b) l'étape supplémentaire consistant à déposer une couche de résine thermo-durcissable sur les surfaces du moule (30) destinées à recevoir ultérieurement la couche de fibres (18) prévue au niveau des faces d'étanchéité (13) de la collerette (11) et du plateau.

5. Procédé de fabrication de brides à collerette selon l'une des revendications 1 à 4, caractérisé par le fait qu'il comprend avant l'étape e) l'étape consistant à déposer une couche de résine thermo-durcissable (14') sur un poinçon (40) destiné à recouvrir la matrice du moule, au niveau de la face d'étanchéité (14).

6. Bride à collerette haute pression en matériau composite réalisée conformément au procédé selon l'une des revendications 1 à 5, caractérisée par le fait qu'elle comprend :

une préforme à base de fibres de verre (17) ou analogues délimitant la face extérieure (15) du plateau et la face extérieure (16) de la collerette (11),

au moins une couche de fibres de verre (18) ou analogues au niveau de la face d'étanchéité (13) de la collerette et du plateau,

au moins une couche de fibres de verre (19) ou analogues au niveau de la face de raccordement (14) du plateau (12),

un corps (20) en béton de résine thermo-durcissable, comprenant des charges minérales (21) inertes vis-à-vis des produits destinés à être véhiculés.

7. Bride à collerette haute pression selon la revendication 6, caractérisée par le fait que les couches de fibres (17, 18, 19) sont choisies de telle sorte qu'elles jouent le rôle de filtre interdisant le passage des charges minérales (21) du corps (20), tout en étant susceptibles d'être imprégnées aisément par la résine thermo-durcissable.

8. Bride à collerette haute pression selon l'une des revendications 6 et 7, caractérisée par le fait que la préforme (17) en fibres de verre possède un poids moyen compris entre 1 750 et 2 250 g/m².

9. Bride à collerette haute pression selon l'une des revendications 6 à 8, caractérisée par le fait que les fibres de verre (18) prévues au niveau de la face d'étanchéité (13) de la collerette (11) et du plateau forment un voile d'un poids moyen de l'ordre de 100 g/m².

10. Bride à collerette haute pression selon l'une des revendications 6 à 9, caractérisée par le fait que la couche (19) de fibres de verre prévue au niveau de la face de raccordement (14) du plateau (12) possède un poids moyen compris entre 2 500 et 3 000 g/m².

11. Bride à collerette haute pression selon l'une des revendications 6 à 10, caractérisée par le fait que la granulométrie moyenne des charges minérales (21) est comprise entre 0,2 et 5 mm.

12. Bride à collerette haute pression selon l'une des revendications 6 à 11, caractérisée par le fait que la densité apparente des charges minérales (21) à l'état tassé est ⩾1,6.

13. Bride à collerette haute pression selon l'une des revendications 6 à 12, caractérisée par le fait que le pourcentage en poids des charges minérales (21) est ⩾75 %.

14. Bride à collerette haute pression selon l'une des revendications 6 à 13, caractérisée par le fait que les fibres composant la préforme (17) sont orientées environ pour moitié perpendiculairement à l'axe O-O de symétrie de révolution de la bride, les autres fibres étant orientées sensiblement parallèlement aux faces extérieures (15, 16) de la collerette.

15. Bride à collerette haute pression selon l'une des revendications 6 à 14, caractérisée par le fait que les fibres du voile (18) prévu au niveau de la face d'étanchéité (13) sont orientées sensiblement parallèlement à l'axe O-O de symétrie de révolution de la bride.

16. Bride à collerette haute pression selon l'une des revendications 6 à 15, caractérisée par le fait que les fibres (19) renforçant la face de raccordement (14) du plateau (12) s'étendent sensiblement perpendiculairement à l'axe O-O de symétrie de révolution de la bride.

## Claims

1. Process for producing high-pressure collared flanges made of composite material, characterized in that it comprises the following steps :

a) placing in the die (30) of a mould a preform (17) based on glass fibres or the like and intended to delimit the outer surface (15) of the top (12) and the outer surface (16) of the collar (11),

b) depositing at least a layer of glass fibres or the like (18) in the die of the mould in the region of the sealing face (13) of the collar (11) and of the top (12),

c) filling the die (30) of the mould with mineral fillers (21) which are inert relative to the products intended to be conveyed and which have suitable dimensions in relation to the layers of fibres used (17, 18), so that the latter perform the function of a filter preventing the passage of the fillers,

d) covering the mineral fillers (21) with at least one layer of glass fibres (19) or the like in the region of the connecting face (14) of the top,

e) closing the mould,

f) injecting thermosetting resin inside the mould, whilst at the same time connecting the latter to suction-generating means.

2. Process for producing collared flanges according to Claim 1, characterized in that it also includes the step involving compacting the mineral fillers (21) by vibrating the mould (30) (Figure 2d).

3. Process for producing collared flanges according to one of Claims 1 and 2, characterized in that it also includes the additional step involving arranging the mould (30), into which the thermosetting resin has been injected, inside a polymerizing oven (55) (Figure 2h).

4. Process for producing collared flanges according to one of Claims 1 to 3, characterized in that it includes, before step b), the additional step involving depositing a layer of thermosetting resin on the surfaces of the mould (30) which are intended for subsequently receiving the layer of fibres (18) provided in the region of the sealing faces (13) of the collar (11) and of the top.

5. Process for producing collared flanges according to one of Claims 1 to 4, characterized in that it includes, before step e), the step involving depositing a layer of thermosetting resin (14') on a mandrel rod (40) intended to cover the die of the mould in the region of the sealing face (14).

6. High-pressure collared flange made of composite material, produced by means of the process according to one of Claims 1 to 5, characterized in that it comprises :

a preform which is based on glass fibres (17) or the like and which delimits the outer face (15) of the top and the outer face (16) of the collar (11),

at least one layer of glass fibres (18) or the like in the region of the sealing face (13) of the collar and of the top,

at least one layer of glass fibres (19) or the like in the region of the connection face (14) of the top (12),

a body (20) made of thermosetting resin concrete and incorporating mineral fillers (21) inert relative to the products intended to be conveyed.

7. High-pressure collared flange according to Claim 6, characterized in that the layers of fibres (17, 18, 19) are selected in such a way that they perform the function of a filter preventing the passage of the mineral fillers (21) of the body (20), whilst at the same time they are capable of being impregnated easily by the thermosetting resin.

8. High-pressure collared flange according to one of Claims 6 and 7, characterized in that the preform (17) made of glass fibres has an average weight of between 1,750 and 2,250 g/m².

9. High-pressure collared flange according to one of Claims 6 to 8, characterized in that the glass fibres (18) provided in the region of the sealing face (13) of the collar (11) and of the top form a film of an average weight of 100 g/m².

10. High-pressure collared flange according to one of Claims 6 to 9, characterized in that the layer (19) of the glass fibres provided in the region of the connection face (14) at the top (12) has an average weight of between 2,500 and 3,000 g/m².

11. High-pressure collared flange according to one of Claims 6 to 10, characterized in that the average grain size of the mineral fillers (21) is between 0.2 and 5 mm.

12. High-pressure collared flange according to one of Claims 6 to 11, characterized in that the apparent density of the mineral fillers (21) in the compacted state is ≥ 1.6.

13. High-pressure collared flange according to one of Claims 6 to 12, characterized in that the percentage by weight of the mineral fillers (21) is ≥ 75 %.

14. High-pressure collared flange according to one of Claims 6 to 13, characterized in that approximately half the fibres composing the preform (17) are directed perpendicularly relative to the axis O-O of symmetry of revolution of the flange, the other fibres being directed substantially parallel to the outer faces (15, 16) of the collar.

15. High-pressure collared flange according to one of Claims 6 to 14, characterized in that the fibres of the film (18) provided in the region of the sealing face (13) are directed substantially parallel to the axis O-O of symmetry of revolution of the flange.

16. High-pressure collared flange according to one of Claims 6 to 15, characterized in that the fibres (19) reinforcing the connection face (14) of the top (12) extend substantially perpendicularly relative to the axis O-O of symmetry of revolution of the flange.

## Patentansprüche

1. Verfahren zur Herstellung von Hochdruckringflanschen aus Verbundwerkstoff, gekennzeichnet durch :

a) Anordnen eines zur Begrenzung der Außenfläche (15) der Scheibe (12) und der Außenfläche (16) des Flansches (11) dienenden Vorformlings (17) auf Glasfaserbasis oder Ähnlichem in der Matrize (30) einer Preßform ;

b) Anordnen wenigstens einer Glasfaserschicht oder Ähnlichem (18) in der Matrize der Preßform, und zwar in Höhe der Dichtfläche des Flansches (11) und der Scheibe (12) ;

c) Beschicken der Matrize (30) der Preßform mit gegenüber den für den Transport bestimmten Produkten inertem mineralischen Füllstoff (21), der in bezug auf die Faserschichten (17, 18) geeignete Dimensionen aufweist, wobei die Faserschichten derart verwendet werden, daß sie die Funktion eines Filters übernehmen und das Hindurchtreten des Füllstoffes verhindern ;

d) Abdecken des mineralischen Füllstoffes (21) mit wenigstens einer Glasfaserschicht (19) oder Ähnlichem in Höhe der Verbindungsfläche (14) der Scheibe ;

e) Schließen der Preßform ;

f) Einspritzen des hitzehärtbaren Harzes in das Innere der Preßform, und zwar unter Verbindung derselben mit einem Unterdruckgenerator.

2. Verfahren zur Herstellung von Hochdruckringflanschen nach Anspruch 1, gekennzeichnet durch die Verdichtung des mineralischen Füllstoffes (21), indem die Preßform (30) in Schwingung versetzt wird (Figur 2d).

3. Verfahren zur Herstellung von Hochdruckringflanschen nach einem der Ansprüche 1 und 2, dadurch gekennzeichnet, daß die Preßform (30), in die hitzehärtbares Harz eingespritzt wurde, in einem Polymerisationsapparat (55) angeordnet wird (Figur 2h).

4. Verfahren zur Herstellung von Hochdruckringflanschen nach einem der Ansprüche 1 bis 3, dadurch gekennzeichnet, daß vor Durchführung von Schritt (b) eine hitzehärtbare Harzschicht auf die Oberflächen der Preßform (30) aufgebracht wird, die zur späteren Aufnahme der in Höhe der Dichtflächen (13) des Flansches (11) und der Scheibe vorgesehenen Faserschicht (18) bestimmt sind.

5. Verfahren zur Herstellung von Hochdruckringflanschen nach einem der Ansprüche 1 bis 4, dadurch gekennzeichnet, daß vor Durchführung von Schritt (e) in Höhe der Dichtfläche (14) eine hitzebeständige Harzschicht (14') auf einen Preßdorn (40) aufgebracht wird, der zur Abdeckung der Matrize der Preßform bestimmt ist.

6. Hochdruckringflansch aus Verbundwerkstoff, hergestellt in einem Verfahren insbesondere nach einem der Ansprüche 1 bis 5, gekennzeichnet durch :

einen Vorformling auf der Grundlage von Glasfasern (17) oder Ähnlichem, der die Außenfläche (15) der Scheibe und die Außenfläche (16) des Flansches (11) abgrenzt ;

wenigstens eine Glasfaserschicht (18) oder Ähnliches in Höhe der Dichtfläche (13) des Flansches und der Scheibe ;

wenigstens eine Glasfaserschicht (19) oder Ähnliches in Höhe der Verbindungsfläche (14) der Platte (12) ;

einen Körper (20) aus hitzehärbarem Harzbeton, der mineralischen Füllstoff (21) aufweist, der gegenüber den für den Transport bestimmten Produkten inert ist.

7. Hochdruckringflansch nach Anspruch 6, dadurch gekennzeichnet, daß die Faserschichten (17, 18, 19) derart gewählt sind, daß sie die Funktion eines den Durchtritt des mineralischen Füllstoffes (21) des Körpers (20) verhindernden Filters (20) übernehmen und für die problemlose Imprägnierung mit hitzehärtbarem Harz geeignet sind.

8. Hochdruckringflansch nach einem der Ansprüche 6 und 7, dadurch gekennzeichnet, daß der Vorformling (17) aus Glasfasern ein durchschnittliches Gewicht zwischen 1 750 und 2 250 g/m² besitzt.

9. Hochdruckringflansch nach einem der Ansprüche 6 bis 8, dadurch gekennzeichnet, daß die in Höhe der Dichtfläche (13) des Flansches (11) und der Scheibe vorgesehenen Glasfasern (18) einen Gürtel bzw. Schleier eines durchschnittlichen Gewichtes in der Größenordnung von 100 g/m² bilden.

10. Hochdruckringflansch nach einem der Ansprüche 6 bis 9, dadurch gekennzeichnet, daß daß die in Höhe der Verbindungsfläche (14) der Scheibe (12) vorgesehene Glasfaserschicht (19) ein durchschnittliches Gewicht zwischen 2 500 und 3 000 g/m² besitzt.

11. Hochdruckringflansch nach einem der Ansprüche 6 bis 10, dadurch gekennzeichnet, daß die durchschnittliche Granulometrie des mineralischen Füllstoffes (21) zwischen 0,2 und 5 mm liegt.

12. Hochdruckringflansch nach einem der Ansprüche 6 bis 11, dadurch gekennzeichnet, daß die offensichtliche Dichte des mineralischen Füllstoffes (21) im verdichteten Zustand ≥ 1,6 beträgt.

13. Hochdruckringflansch nach einem der Ansprüche 6 bis 12, dadurch gekennzeichnet, daß der Gewichtsprozentsatz des mineralischen Füllstoffes (21) ≥ 75 % beträgt.

14. Hochdruckringflansch nach einem der Ansprüche 6 bis 13, dadurch gekennzeichnet, daß die den Vorformling (17) bildenden Fasern etwa zur Hälfte senkrecht zur Symmetrieachse O-O der Drehung des Rings und für den Rest etwa parallel zu den Außenflächen (15, 16) des Flansches orientiert sind.

15. Hochdruckringflansch nach einem der Ansprüche 6 bis 14, dadurch gekennzeichnet, daß die Fasern des in Höhe der Dichtfläche (13) vorgesehenen Gürtels bzw. Schleiers (18) hauptsächlich parallel zur Symmetrieachse O-O der Drehung des Rings orientiert sind.

16. Hochdruckringflansch nach einem der Ansprüche 6 bis 15, dadurch gekennzeichnet, daß sich die die Verbindungsfläche (14) der Scheibe (12) verstärkenden Fasern (19) hauptsächlich senkrecht zur Symmetrieachse O-O der Drehung des Rings erstrekken.

FIG.1

FIG. 2a   FIG. 2b   FIG. 2c
FIG. 2d   FIG. 2e   FIG. 2f
FIG. 2g   FIG. 2h   FIG. 2i